Europäisches Patentamt

European Patent Office

Office européen des brevets

(19)

(11) Publication number: **0 426 346 A2**

# EUROPEAN PATENT APPLICATION

(12)

(21) Application number: **90311530.1**

(22) Date of filing: **19.10.90**

(51) Int. Cl.5: **C08L 23/04**, C08J 9/06,
//(C08L23/04,23:04)

(30) Priority: **24.10.89 ES 8903577**

(43) Date of publication of application:
**08.05.91 Bulletin 91/19**

(84) Designated Contracting States:
**DE ES GB**

(71) Applicant: **BXL ESPANA SA**
**Paseo de la Castellana 91**
**Madrid(ES)**

(72) Inventor: **Garcia Jimenez, Francisco**
**BXL Espana SA, Paseo de la Castellana 91**
**E-28046 Madrid(ES)**
Inventor: **Shih, John**
**BXL Espana SA, Paseo de la Castellana 91**
**E-28046 Madrid(ES)**

(74) Representative: **Krishnan, Suryanarayana**
**Kalyana et al**
**BP INTERNATIONAL LIMITED Patents &**
**Agreements Division Chertsey Road**
**Sunbury-on-Thames Middlesex TW16**
**7LN(GB)**

(54) **Method for producing polyolefin blends and moulded articles therefrom.**

(57) This invention relates to a method for the production of foams from blends of polyolefins comprising (A) a non-halogenated olefin polymer or polymer blend, (B) a linear very low density polyethylene and (C) a polyethylene of very low molecular weight, characterised by the fact that the molecular weight of the polymer (C) lies between 1,000 and 20,000 and the polymers (A), (B), and (C) are different from each other. The blend is made up from 90 to 10 parts by weight of olefin polymer (A) with 10 to 90 parts by weight of polymer (B) with a range of densities from 0.860 to 0.915g/cm$^3$ and from 5 to 100, preferably 5 to 50 parts by weight per 100 parts of (A) and (B) of the polymer (C).

EP 0 426 346 A2

# METHOD FOR PRODUCING POLYOLEFIN BLENDS AND MOULDED ARTICLES THEREFROM

This invention relates to the production of polyolefin blends comprising linear low density polyethylene and to moulded articles produced therefrom and particularly but not exclusively to moulded articles comprising cellular cross-linked polyolefin.

Moulded articles produced from low density polyethylene (LDPE) and particularly cellular articles of cross-linked LDPE are known to have higher tear strength if, for example, a proportion of the LDPE is replaced by linear low density polyethylene (LLDPE) having a Vicat softening point of less than 105°C, or a density in the range 0.915 to 0.94 g/cm$^3$ and Melt Index in the range 0.5 to 50 g/10 min.

It is also known that if LDPE is blended with LLDPE of a very low density (LVLDPE), for example in the density range 0.860 to 0.915 g/cm$^3$, cellular moulded cross-linked products can have good softness and mouldability while also having good strength.

While such a combination of desirable properties may be obtained thus for cross-linked moulded polyolefin articles, the introduction of LVLDPE into LDPE gives rise to processing problems, particularly when the LVLDPE constitutes a major proportion of the blend or when long melt-mixing times are involved such as in extrusion processes. Bad plastification and poor dispersion of additives arise from the increase in viscosity of the blend caused by the incorporation of the LVLDPE. Machinery normally used for the extrusion of LDPE is often inadequate and tends to stall as a result.

There has thus been an on-going need for improving methods of producing blends of LDPE and LVLDPE to attain the desired properties, including softness, without incurring processing problems.

According to the present invention there is provided a method for producing a polyolefin blend comprising melt mixing

(A) a non-halogenated olefin polymer or polymer blend with (B) a linear very low density ethylene polymer and (C) a very low molecular weight ethylene polymer characterised in that the weight average molecular weight (Mw) of polymer (C) is in the range 1000 to 20,000 and the polymers (A), (B) and (C) are different from one another.

In a preferred embodiment the method of this invention comprises melt mixing

(A) 90 to 10 parts by weight of a non-halogenated olefin polymer or polymer blend with (B) 10 to 90 parts by weight of a linear very low density polyethylene having a density in the range 0.860-0.915 g/cm$^3$ and (C) 5 to 100 preferably 5 to 50, parts per 100 parts of [(A) + (B)] of a very low molecular weight polyethylene having a molecular weight (Mw) in the range 1000 to 20,000 wherein the olefin polymers (A), (B) and (C) are different from one another.

In a further aspect of this invention there is provided a method for producing a cellular cross-linked polyolefin moulded article which comprises producing a blend of polymers (A), (B) and (C) as above described, optionally incorporating a chemical cross-linking agent (D) and/or a blowing agent (E), causing cross-linking to occur within the blend by decomposing the chemical cross-linking agent and/or subjecting the blend to ionising radiation and simultaneously or subsequently activating the blowing agent.

The use of a chemical blowing agent facilitates the production of cellular cross-linked polyolefin moulded articles in a continuous form. Thus continuous strip, sheet or article of other cross-sectional shape can be prepared.

The cellular products of this invention have excellent mechanical properties, good thermostability, a pleasant soft feel, low compression set, and good elasticity.

This invention relates inter alia to the polyolefin blends and to moulded articles produced by the method herein described.

Polymer (A) employed in this invention may comprise any non-halogenated olefin polymer, for example, low density polyethylene (LDPE), linear low density polyethylene (LLDPE), medium density polyethylene (MDPE), ethylene-propylene copolymer (EPM), ethylene-propylene-diene terpolymer (EPDM), ethylene-vinylacetate copolymer (EVA), ethylene-ethyl acetate copolymer (EEA), polybutene (PB) either alone or in admixture with one or more of such polymers or other non-halogenated olefin polymers.

When polymer (A) comprises a low density polyethylene the latter preferably has a density greater than 0.915g/cm$^3$ and a molecular weight (Mw) of 80,000-220,000. When polymer (A) comprises an ethylene-vinyl acetate copolymer the latter preferably contains from 5 to 30% by weight of copolymerised vinyl acetate.

Polymer (B) preferably has a density in the range 0.86 to 0.915 g/cm$^3$, more preferably in the range 0.88 to 0.915 g/cm$^3$ and especially in the range 0.89 to 0.91. The melt index is preferably in the range 0.1 to 25.0 g/10 min more preferably in the range 0.5 to 15 g/10 min. Further, polymer (B) preferably has a vinyl group content of from 0.10 to 0.45, more preferably from 0.15 to 0.40 per 1000 carbon atoms. The molecular weight (Mw) is preferably in the range 10,000 to 250,000 more preferably in the range 50,000 to 200,000. The melting point of the polymer (B) is preferably below 125°C.

When the polyolefin blends of the present invention are used to produce cross-linked cellular products, if the amount of polymer (B) in the blend is:

a) below 10 parts, the elasticity and softness of the product may deteriorate;

b) above 90 parts, the amount of polymer (C) required to maintain good processibility, plasticifation and dispersion of additives may be undesirably high.

Blowing agents that may be employed in the method of this invention applied to cellular article production may be physical blowing agents or chemical blowing agents. Physical blowing agents can be employed in known manner and may be blended in under pressure during the melt mixing employed in this invention, or, the blowing agents impregnated under pressure into a formed article produced after the melt-mixing. Such blowing agents are commonly known and used and include, for example, a gas such as nitrogen or a volatile liquid such as iso-pentane. Chemical blowing agents also commonly known, are, however, preferred. These may be blended in during the melt-mixing, preferably under conditions preventing any significant decomposition and may comprise one or more of azodicarbonamide, N,N'-dinitrosopentamethylene tetramine, oxybis(benzene sulphonyl hydrazide), p-toluene sulphonyl semicarbazide, for example.

Such chemical blowing agents may be employed in an amount from about 0.1 to about 30% by weight based on the weight of the total polymeric material employed in the polyolefin blend.

While, as indicated above, cross-linking may be effected by use of ionising radiation it is preferred that cross-linking be effected using a chemical cross-linking agent. Such agents may be blended in during the melt-mixing employed in this invention and preferably under conditions preventing any significant activation. Examples of such chemical cross-linking agents that may be employed are organic peroxides such as dicumyl peroxide, 2,2-bis(t-butyl peroxy)octane; n-butyl-4,4-bis(t-butyl peroxy)valerate; di-t-butyl peroxide; t-butyl cumyl peroxide; 1,3-bis(t-butyl peroxy-isopropyl)benzene; 2,5-dimethyl-2,5-di(t-butyl peroxy)hexane; 2,5-dimethyl-2,5-di-(t-butyl peroxy)hexyne-3 and di-t-amyl peroxide.

Such chemical cross-linking agents may be employed in an amount from for example 0.3 to 2.0% by weight based on the total weight of the polymeric material employed in the polyolefin blend.

It will be appreciated that other additives which may be optionally incorporated either alternatively or in addition to those mentioned above, include fire retardants, antioxidants, UV stabilisers, antistatic agents, pigments and fillers, for example.

In operating the method of this invention, polymers (A), (B) and (C) are selected in the requisite proportions by weight, melt-blended together in a suitable mixing equipment which may include one or more of a roller mill, Banbury-type mixer and extruder. Moulded articles may be produced from these blends by compression moulding, sheeting out from a mill or calender or extrusion moulding. In continuous processes, extruder mixing followed by extrusion moulding is preferred.

In operating the method of this invention for the production of cellular cross-linked moulded articles, extrusion moulding of the polyolefin blend is preferred. In such a method it is preferred that after extrusion moulding, the polyolefin blend is subjected to cross-linking and expansion to its cellular structure preferably sequentially in that order.

The blowing agent used to effect expansion in known manner is preferably incorporated during the melt-mixing prior to extrusion and preferably comprises a chemical blowing agent. Cross-linking is preferably effected by using a chemical cross-linking agent suitably incorporated into the polyolefin blend also during the melt mixing. This method is readily adapted for the continuous production of a cellular cross-linked polyolefin article.

The following Examples are given as illustration only of the method of this invention and should not be construed as limiting the scope thereof:-

Example 1

A masterbatch premixture was prepared by mixing 30 parts by weight of LDPE (Grade PE-024, ex REPSOL, SA) powder, 6.5 parts of azodicarbonamide and 1.15 parts of dicumyl peroxide in an extruder having a bore of 30 mm diameter, screw speed of 25 rpm and barrel temperature of 100 - 120°C. The mixed masterbatch was extruded and diced.

The masterbatch was then mixed under similar extruder conditions with a dry blend of 25 parts by weight of EVA copolymer (Grade PA-538, ex REPSOL, 5A), 35 parts of LVLDPE (Grade NORSOFLEX FW1900, ex CdF Chemie) and 15 parts of VLMWPE (Grade PE-023, ex REPSOL, SA) for every 37.65 parts of LDPE in the masterbatch and the polyolefin blend thus obtained extruded as a continuous sheet of

3

thickness 2.0 mm through a sheeting die held at a temperature of 120°C. The continuously produced sheet was fed at a rate of 2.0m/min through a first oven of length 6m where it was heated by infra-red heaters to a temperature of 250°C to cause the cross-linking agent to decompose and cross-link the polyolefin blend. The cross-linked sheet was then immediately, at the same speed, passed through a hot air oven at 250°C and of length 9m whereby the chemical blowing agent was activated and the polyolef in blend expanded to provide a cellular homogeneous structure having the properties shown in the following table. The table gives comparative figures for a similar foam sheet prepared by extruding and oven treating under the same conditions a mixture comprising 100 parts by weight LDPE, 6.5 parts of azodicarbonamide and 0.95 parts of dicumyl peroxide.

|  | Example | Comparison |
|---|---|---|
| Density ($Kg/m^3$) | 76 | 77 |
| Compression resistance ($Kg/cm^2$) |  |  |
| at 10% | 0.58 | 0.94 |
| at 25% | 0.88 | 1.18 |
| Elasticity (%) | 40 | 20 |

The resins employed in the foregoing Example and Comparison were as follows having the physical characteristics indicated:-

|  | Melt index* (g/10m) | Density $g/cm^3$) |
|---|---|---|
| LDPE | 3.5 | 0.918 |
| LVLDPE | 1.1 | 0.900 |
| VLMWPE | 200 | 0.913 |
| EVA | 2.0 | 0.937 |

*Measured using the test procedure according to ASTM D-1238.

## Example 2

Using a procedure similar to Example 1 above on the following formulations, cross-linked cellular polyolefin sheets were prepared.

|  | Example 2 | Comparative Test |
|---|---|---|
| LDPE | 40 | 100 |
| LVLDPE | 25 | - |
| VLMWPE | 5 | - |
| EVA | 35 | - |
| AZODICARBONAMIDE | 17 | 15 |
| DICUMYL PEROXIDE | 1.15 | 0.95 |

The resins employed in Example 2 were the same as those used in Example 1. The properties of the cross-linked cellular products obtained were as follows:

4

|  | Example 2 | Comparative Test |
|---|---|---|
| Density (Kg/m$^3$) | 30 | 30 |
| Compression resistance (Kg/cm$^2$) |  |  |
| at 10% | 0.15 | 0.24 |
| at 25% | 0.30 | 0.43 |
| Elasticity (%) | 50 | 33 |

**Claims**

1. A method for producing a polyolefin blend comprising melt-mixing
   A) a non-halogenated olefin polymer or polymer blend
   with B) a linear very low density ethylene polymer and
   C) a very low molecular weight ethylene polymer characterised in that the molecular weight (Mw) of polymer (C) is in the range 1000 to 20,000 and the polymers (A), (B) and (C) are different from one another.

2. A method as claimed in Claim 1 comprising melt-mixing 90 to 10 parts by weight of olefin Polymer (A) with 10 to 90 parts by weight of polymer (B) having a density in the range 0.86 - 0.915 g/cm$^3$ and 5 to 100 preferably 5 to 50 parts by weight per 100 parts of [(A) + (B)] of polymer (C)

3. A method as claimed in either Claim 1 or Claim 2 wherein the melt-mixed polyolefin blend is extruded.

4. A method as claimed in Claim 3 wherein the extruded blend is subsequently cross-linked and expanded to a cellular structure.

5. A method as claimed in Claim 4 wherein a chemical cross-linking agent and a chemical blowing agent are incorporated into the polyolefin blend during the melt-mixing.

6. A method as claimed in Claim 5 wherein the polymer (A) comprises low density polyethylene.

7. A method as claimed in Claim 5 or 6 wherein at least a portion of the polymer (A) is premixed with the blowing agent and the cross-linking agent prior to being blended with the polymers (B) and (C).

8. A method as claimed in Claim 7 wherein the premixed polymer (A) is extruded at a temperature above the temperature at which the polymer (A) is softened and the extruded mass ground into granular form.

9. A method as claimed in Claim 7 wherein only a portion of polymer (A) is premixed and the polymers (B) and (C) are dry blended with the remainder of the polymer (A) for subsequent blending of the dry blend with the premixed polymer (A).

10. A method as claimed in any one of Claims 3 to 9 wherein the polyolefin blend is extruded as a sheet.

11. A method as claimed in any one of Claims 5 to 9 wherein the extruded blend is in the form of a sheet and cross-linking and expansion are effected in the temperature range 150°C to 275°C.

12. A method according to Claim 11 wherein the oross-linking and expansion are effected by passing the sheet initially through an infra-red oven and subsequently through a hot air oven.

13. A method as claimed in claim 11 or 12 wherein the cross-linking and expansion are effected by heating the sheet initially at 150-250°C and subsequently at 210-260°C.

14. A method as claimed in Claim 13 wherein the blowing agent is azodicarbonamide and the chemical cross-linking agent is an organic peroxide.

15. A method as claimed in Claim 14 wherein the chemical cross-linking agent is an organic peroxide with a 10 hours half-life temperature in the range 92°C to 130°C preferably in the range 110°C to 120°C.

16. A method as claimed in Claim 15 wherein the organic peroxide is dicumyl peroxide.